# EUROPEAN PATENT APPLICATION

(11) **EP 4 635 384 A1**
(43) Date of publication of application: **22.10.2025**
(21) Application number: 23903961.3
(22) Date of filing: 12.12.2023
(51) Int. Cl.: A47J 47/01, B67D 1/06, B67D 1/00, G06Q 50/12, A47J 27/14, A47J 36/32, G06Q 50/10, G06Q 10/08, G06K 19/06, G06K 7/14

(54) **DISPENSER CAPABLE OF SUPPLYING LIQUID SOURCE AND POWDER SOURCE**

(30) Priority: 14.12.2022 KR 20220174919; 26.09.2023 KR 20230129590
(71) Applicant: Mandarin Robotics, Inc., Yongin-si, Gyeonggi-do 16942 (KR)
(72) Inventor: KIM, Mingyu, Seoul 02057 (KR); PARK, Chunhyung, Seoul 03304 (KR)
(74) Representative: Abel & Imray LLP
(86) International application number: PCT/KR2023/020435
(87) International publication number: WO 2024/128758

(57) **Abstract**

A dispenser capable of supplying a liquid seasoning and a powder seasoning, according to an embodiment, comprises: a dispenser body; a powder supply unit; a liquid supply unit; a tray positioned below the powder supply unit and the liquid supply unit; a plurality of prep containers arranged on the tray; and a control unit for controlling the powder supply unit, the liquid supply unit, and the tray, wherein any one of the plurality of prep containers may accommodate the solid seasoning discharged from the powder supply unit, accommodate the liquid seasoning discharged from the liquid supply unit, or accommodate the solid seasoning and the liquid seasoning at the same time.

## Description

### TECHNICAL FIELD

The present disclosure relates to a dispenser configured to supply a liquid seasoning and a powder seasoning.

### BACKGROUND ART

A dispenser for appropriately supplying a seasoning required for preparing dishes has been developed. Seasonings may be classified into liquid seasonings and powder seasonings. A dish may require various types of liquid seasonings and various types of powder seasonings.

Korean Registered Patent No. 10-2008284 discloses a food seasoning supply device. A previous food seasoning supply device dispenses an inaccurate amount of seasoning and make it difficult to determine to which dish each dispensed seasoning should be added when multiple dispensing operations are performed.

Korean Public Patent No. 10-2018-0083753 discloses a smart seasoning dispenser.

The above description is information the inventor(s) acquired during the course of conceiving the present disclosure, or already possessed at the time, and was not necessarily publicly known before the present application was filed.

### DISCLOSURE OF THE INVENTION

### TECHNICAL GOALS

An embodiment provides a dispenser configured to supply a liquid seasoning and a powder seasoning.

### TECHNICAL SOLUTIONS

According to an embodiment, a dispenser configured to supply a liquid seasoning and a powder seasoning includes a dispenser body including a table, a main tray provided above the table, and an additional tray provided above the main tray; a powder supply unit including a powder housing disposed on the main tray and configured to accommodate a solid seasoning and a powder nozzle that dispenses the solid seasoning from an internal space of the powder housing to the outside; a liquid supply unit including a liquid housing disposed on the additional tray, spaced apart from the powder supply unit in a vertical direction, and configured to accommodate the liquid seasoning and a liquid nozzle that dispenses the liquid seasoning; a tray movably disposed on the main tray and positioned below the powder supply unit and the liquid supply unit; a plurality of prep containers disposed on the tray; and a control unit configured to control the powder supply unit, the liquid supply unit, and the tray, in which one prep container of the plurality of prep containers accommodates the solid seasoning dispensed from the powder supply unit, accommodates the liquid seasoning dispensed from the liquid supply unit, or accommodates both the solid seasoning and the liquid seasoning simultaneously.

According to an embodiment, a dispenser configured to supply a liquid seasoning and a powder seasoning includes a dispenser body including a table and a main tray provided above the table, and an additional tray provided above the main tray; a powder supply unit including a powder housing disposed on the main tray and configured to accommodate a solid seasoning and a powder nozzle that dispenses the solid seasoning from an internal space of the powder housing to the outside; a liquid supply unit including a liquid housing provided inside the table, disposed at a position spaced apart from the powder supply unit in a vertical direction, and configured to accommodate the liquid seasoning and a liquid nozzle that dispenses the liquid seasoning; a tray movably disposed on the main tray and positioned below the powder supply unit and the liquid supply unit; a plurality of prep containers disposed on the tray; and a control unit configured to control the powder supply unit, the liquid supply unit, and the tray, in which one prep container of the plurality of prep containers accommodates the solid seasoning dispensed from the powder supply unit, accommodates the liquid seasoning dispensed from the liquid supply unit, or accommodates both the solid seasoning and the liquid seasoning simultaneously.

According to an embodiment, a dispenser configured to supply a liquid seasoning and a powder seasoning includes a dispenser body including a table and a main tray provided above the table, and an additional tray provided above the main tray; a powder supply unit including a powder housing disposed on the main tray and configured to accommodate a solid seasoning and a powder nozzle that dispenses the solid seasoning from an internal space of the powder housing to the outside; a liquid supply unit including a liquid housing disposed on the main tray, provided behind the powder supply unit, and configured to accommodate the liquid seasoning and a liquid nozzle that dispenses the liquid seasoning; a tray movably disposed on the main tray and positioned below the powder supply unit and the liquid supply unit; a plurality of prep containers disposed on the tray; and a control unit configured to control the powder supply unit, the liquid supply unit, and the tray, in which one prep container of the plurality of prep containers accommodates the solid seasoning dispensed from the powder supply unit, accommodates the liquid seasoning dispensed from the liquid supply unit, or accommodates both the solid seasoning and the liquid seasoning simultaneously.

### EFFECTS OF THE INVENTION

According to an embodiment, a dispenser configured to supply a liquid seasoning and a powder seasoning may effectively supply the liquid seasoning and the powder seasoning in an automated manner.

### BRIEF DESCRIPTION OF DRAWINGS

FIG. 1 is a perspective view of a dispenser configured to supply a liquid seasoning and a powder seasoning according to an embodiment.
FIG. 2 is a front view of the dispenser configured to supply a liquid seasoning and a powder seasoning according to an embodiment.
FIG. 3 is a block diagram of the dispenser configured to supply a liquid seasoning and a powder seasoning according to an embodiment.
FIG. 4 is a front view partially enlarging a dispenser configured to supply a liquid seasoning and a powder seasoning, according to an embodiment.
FIG. 5 is a perspective view schematically illustrating a tray, a prep container, and a cover, according to an embodiment.
FIG. 6 is a perspective view schematically illustrating a tray and a prep container, according to an embodiment.
FIG. 7 is an exploded perspective view schematically illustrating a tray and a prep container, according to an embodiment.
FIG. 8 is a front view schematically illustrating a dispenser configured to supply a liquid seasoning and a powder seasoning, according to an embodiment.
FIG. 9 is a side view schematically illustrating a dispenser configured to supply a liquid seasoning and a powder seasoning, according to an embodiment.

### BEST MODE FOR CARRYING OUT THE INVENTION

Hereinafter, examples will be described in detail with reference to the accompanying drawings. The following description is one of several aspects of embodiments and the following description forms part of the detailed description of the embodiments. In describing an embodiment, a detailed description of a well-known function or configuration is omitted to clarify the present invention.

However, various alterations and modifications may be made to the embodiments. Here, the embodiments are not construed as limited to the disclosure. The embodiments should be understood to include all changes, equivalents, and replacements within the idea and the technical scope of the disclosure.

In addition, terms or words used in the present specification and claims should not be construed in general meanings or dictionary definitions, and based on a principle that the inventor may properly define the concept of terms to best describe their invention, the terms or words should be construed as meanings and concepts consistent with the technical idea of the invention according to an embodiment.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which embodiments belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

When describing the embodiments with reference to the accompanying drawings, like reference numerals refer to like constituent elements and a repeated description related thereto will be omitted. In the description of embodiments, detailed description of well-known related structures or functions will be omitted when it is deemed that such description will cause ambiguous interpretation of the present disclosure.

Also, in the description of the components, terms such as first, second, A, B, (a), (b) or the like may be used herein when describing components of the present disclosure. These terms are used only for the purpose of discriminating one constituent element from another constituent element, and the nature, the sequences, or the orders of the constituent elements are not limited by the terms. When one constituent element is described as being "connected", "coupled", or "attached" to another constituent element, it should be understood that one constituent element can be connected or attached directly to another constituent element, and an intervening constituent element can also be "connected", "coupled", or "attached" to the constituent elements.

The same name may be used to describe an element included in the embodiments described above and an element having a common function. Unless otherwise mentioned, the descriptions on the embodiments may be applicable to the following embodiments and thus, duplicated descriptions will be omitted for conciseness.

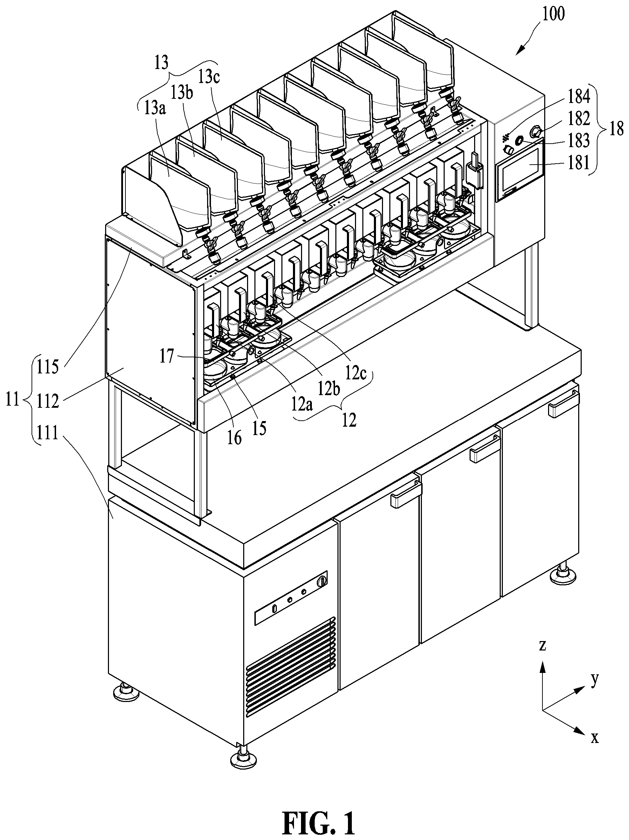

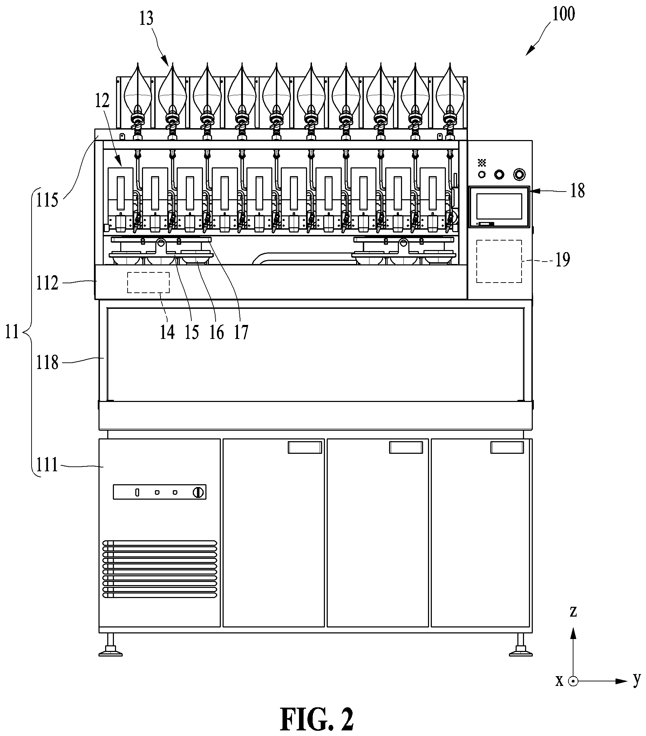

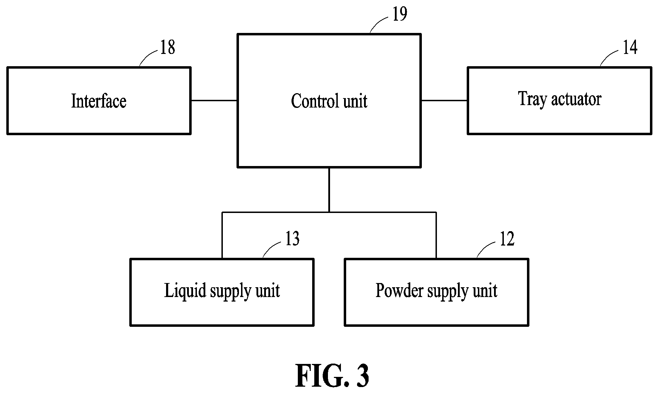

FIG. 1 is a perspective view of a dispenser configured to supply a liquid seasoning and a powder seasoning according to an embodiment. FIG. 2 is a front view of the dispenser configured to supply a liquid seasoning and a powder seasoning according to an embodiment. FIG. 3 is a block diagram of the dispenser configured to supply a liquid seasoning and a powder seasoning according to an embodiment.

Referring to FIGS. 1 to 3, a dispenser (hereinafter referred to as the "dispenser") 100 for supplying a liquid seasoning and a powder seasoning may simultaneously supply the liquid seasoning and the powder seasoning. The dispenser 100 may receive recipe information or may provide an appropriate seasoning based on recipe information stored in a database. For example, the dispenser 100 may pre-store recipe information on *jjamppong*, and, when a user requires a seasoning for *jjamppong*, may provide an appropriate seasoning based on the recipe information on *jjamppong.* For another example, the dispenser 100 may provide an appropriate seasoning based on recipe information provided by the user in real time. The dispenser 100 may include a dispenser body 11, a powder supply unit 12, a liquid supply unit 13, a tray actuator 14, a tray 15, a prep container 16, a shutter 17, and an interface 18.

The dispenser body 11 may configure the exterior of the dispenser 100. The dispenser body 11 may provide a space where the user temporarily puts a food material. The dispenser body 11 may include a table 111, a main tray 112, an additional tray 115, and a connection frame 118.

The table 111 may include an upper plate on which a food material is put and a refrigerator provided below the upper plate. Food materials may be refrigerated in the refrigerator. Although the present embodiment illustrates the liquid supply unit 13 provided above the powder supply unit 12, the position is not limited thereto. For example, a liquid supply unit may be positioned inside the refrigerator.

The main tray 112 may be disposed above the table 111. A space between the main tray 112 and the table 111 may be provided. The tray 15 and the powder supply unit 12 may be disposed on the main tray 112. The interface 18 may be disposed at one side of the main tray 112. The main tray 112 may be connected to the table 111 through the connection frame 118 or may be supported by the connection frame 118 by being put on a table without a direct connection to the table 111. In the present specification, a vertical direction refers to a z-axis direction.

The additional tray 115 may be connected to an upper side of the main tray 112. The additional tray 115 may support the liquid supply unit 113. The additional tray 115 may be disposed at an upper edge of the main tray 112. The additional tray 115 may have a plate shape.

The powder supply unit 12 may supply a solid seasoning. For example, the solid seasoning may be provided in a powder form. For example, the powder supply unit 12 may supply a solid seasoning, like red pepper or salt. The powder supply unit 12 may dispense a solid seasoning towards an internal space of the prep container 16. The powder supply unit 12 may be provided as a plurality of powder supply units. The plurality of powder supply units 12 may include a first powder supply unit 12a, a second powder supply unit 12b, and a third powder supply unit 12c. The first powder supply unit 12a, the second powder supply unit 12b, and the third powder supply unit 12c may be disposed side by side in a y-axis direction. Each of the first powder supply unit 12a, the second powder supply unit 12b, and the third powder supply unit 12c may dispense a different solid seasoning. The powder supply unit 12 may include a powder nozzle for supplying a powder seasoning.

The liquid supply unit 13 may supply a liquid seasoning. For example, the liquid seasoning may be provided in a liquid form. For example, the liquid supply unit 13 may supply a liquid seasoning, like soy sauce or vinegar. The liquid supply unit 13 may dispense a liquid seasoning towards the internal space of the prep container 16. The liquid supply unit 13 may be provided as a plurality of liquid supply units. The plurality of liquid supply units 13 may include a first liquid supply unit 13a, a second liquid supply unit 13b, and a third liquid supply unit 13c. The first liquid supply unit 13a, the second liquid supply unit 13b, and the third liquid supply unit 13c may be disposed side by side in the y-axis direction. Each of the first liquid supply unit 13a, the second liquid supply unit 13b, and the third liquid supply unit 13c may dispense a different liquid seasoning. The liquid supply unit 13 may include a liquid nozzle for supplying a liquid seasoning.

The powder nozzle of the powder supply unit 12 and the liquid nozzle of the liquid supply unit 13 may be disposed side by side in the y-axis direction. Powder nozzles and liquid nozzles may be alternately disposed side by side in the y-axis direction. For example, any one liquid nozzle may be provided between two powder nozzles.

The powder nozzle of the powder supply unit 12 and the liquid nozzle of the liquid supply unit 13 may simultaneously supply seasonings to any one prep container 16. For example, a distance d1 between the powder nozzle and the liquid nozzle that are adjacent may be less than an inner diameter d2 of the upper edge of the prep container 16. In this structure, with the position of the prep container 16 being fixed and a solid seasoning being supplied from the powder nozzle, a liquid seasoning is being simultaneously supplied from the liquid nozzle. The distance d1 between the powder nozzle and the liquid nozzle that are adjacent may be less than a width w1 of a hole provided in the shutter 17. In this structure, with a nozzle and a tray being aligned, seasonings dispensed from a powder nozzle and a liquid nozzle may normally pass through a shutter. According to a general recipe, a solid seasoning and a liquid seasoning are often added together. In the present disclosure, different types of simultaneously added seasonings are added together in one prep container to reduce the number of prep containers and provide sufficient types of seasonings together in one tray 15.

The tray actuator 14 may be provided on the main tray 112 and may drive the tray 15 in the y-axis direction. The tray actuator 14 may generate power and may transmit it to the tray 15. For example, the tray actuator 14 may include a linear actuator. The tray actuator 14 may include a linear guide.

The tray 15 may be connected to the main tray 112 and may slide along the main tray 112. The tray 15 may support a plurality of prep containers 16. It should be noted that, although two trays 15 are illustrated as being disposed on the main tray 112, examples are not limited thereto. For example, only one tray 15 may be disposed on the main tray 112.

The prep container 16 may include an internal space for accommodating a seasoning. The prep container 16 may be provided as the plurality of prep containers 16. The prep container 16 may have the size being the largest at the upper edge and the size being gradually smaller as being closer to a lower side edge. For example, the prep container 16 may have the largest diameter size at the upper edge.

Although, in the dispenser of the present embodiment, each of a plurality of prep containers includes one or more seasonings to be sequentially added according to a recipe in a preparation process of a dish to be described below, a plurality of seasonings to be simultaneously added in the preparation process may be set to be put in an individual prep container.

In addition, in an embodiment of the present disclosure, when individual nozzles or a plurality of nozzle groups are disposed at an equal distance in the dispenser, a pitch between the plurality of prep containers, when being seated in a tray, is configured to the same as or n multiples or 1/n multiples (n is an integer including 1) of a distance between the individual nozzles or a distance between the nozzle groups such that, when a seasoning is dispensed from an upper nozzle to a prep container, a corresponding seasoning may be simultaneously dispensed from the upper nozzle to another prep container according to a situation.

For example, a pitch between two adjacent powder nozzles is referred to as a first pitch P1, and a pitch between two adjacent prep containers is referred to as a second pitch P2. The length of the first pitch P1 may be n multiples (n may be an integer including 1) of the length of the second pitch P2. The length of the second pitch P2 may be n multiples (n may be an integer including 2) of the length of the first pitch P1.

The shutter 17 may selectively block a path through which a seasoning enters the prep container 16. For example, the shutter 17 may selectively open and close an upper area of the prep container 16. Seasonings supplied from the powder supply unit 12 and the liquid supply unit 13 may enter in an open state of the shutter 17.

The interface 18 may receive a signal from the outside or may output a signal to the outside. For example, the interface 18 may receive a signal from the user or an external server and may transmit it to the control unit 19. For example, the interface 18 may output an auditory or visual signal to the outside. The interface 18 may be provided at one side of the main tray 112. For example, the interface 18 may be provided in a horizontal direction in parallel to the powder supply unit 12. According to this arrangement, an excessive increase in the height of the dispenser 100 may be prevented. The interface 18 may include a display 181, a button 182, a code recognizer 183, and a signal transmitter 184.

The display 181 may output visual data to the user. The display 181 may include a touch screen. The user may manipulate the dispenser 100 by touching the display 181. The display 181 may output information on a current state to the user. For example, the display 181 may display a remaining amount of a seasoning on a screen or may display completion information notifying that all seasonings according to a recipe are put into a prep container on the screen.

The button 182 may be provided around the display 181. The user may manipulate the button 182 and may transmit a signal to the control unit 19.

The code recognizer 183 may recognize a code included by the tray 15. For example, the code may include a QR code.

The signal transmitter 184 may output an auditory signal to the outside. For example, when a seasoning is completely provided, the dispenser 100 may transmit a completion signal to the outside in an auditory form.

The control unit 19 may mutually transmit and receive a signal to and from the powder supply unit 12, the liquid supply unit 13, the tray actuator 14, and the interface 18. The control unit 19 may control the powder supply unit 12, the liquid supply unit 13, the tray actuator 14, and the interface 18. For example, the control unit 19 may control the powder supply unit 12, the liquid supply unit 13, the tray actuator 14, and the interface 18 based on a signal input from the interface 18. The tray actuator 14 may control the movement of the tray 15. The powder supply unit 12, the liquid supply unit 13, the tray actuator 14, and the interface 18 may transmit a signal to the control unit 19. For example, the powder supply unit 12 and the liquid supply unit 13 may transmit information on the remaining amount of a seasoning to the control unit 19, the control unit 19 may transmit the information to the interface 18, and the interface 18 may convert the information into visual or auditory information and may output it.

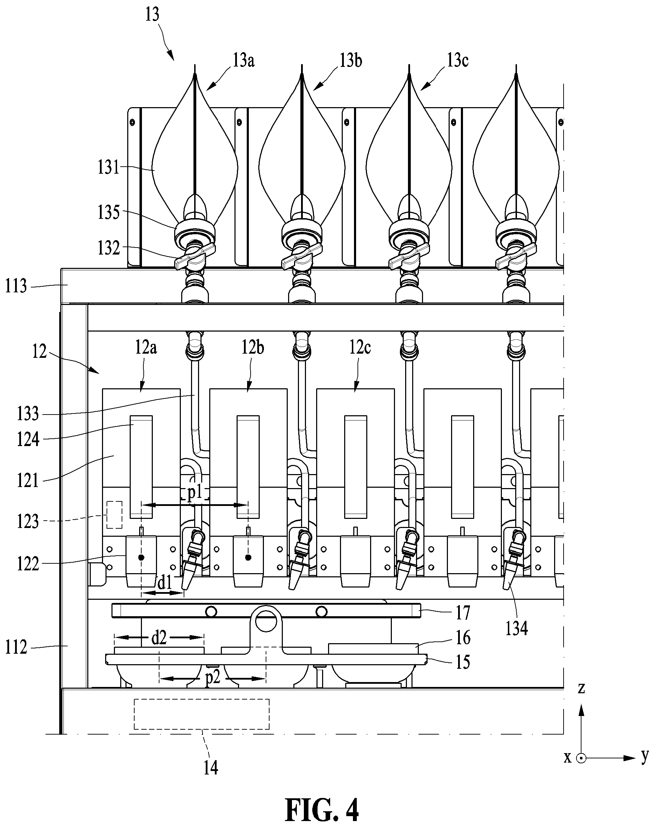

FIG. 4 is a front view partially enlarging a dispenser configured to supply a liquid seasoning and a powder seasoning, according to an embodiment.

Referring to FIG. 4, a powder supply unit 12 may be provided as a plurality of powder supply units. The plurality of powder supply units 12 may include a first powder supply unit 12a, a second powder supply unit 12b, and a third powder supply unit 12c. It should be noted that a feature of the first powder supply unit 12a may include the second powder supply unit 12b and the third powder supply unit 12c as they are. Hereinafter, the first powder supply unit 12a is referred to as the powder supply unit 12 for description.

The powder supply unit 12 may include a powder housing 121, a powder nozzle 122, a powder controller 123, and a powder housing handle 124. The powder housing 121 may accommodate a seasoning in a solid state. The powder housing 121 may include a hollow inside. The powder housing 121 may be detachably provided to the main tray 112. The powder nozzle 122 may dispense a solid seasoning accommodated by the powder housing 121 to the outside. The powder controller 123 may control a dispensing amount of the solid seasoning by receiving information from a control unit and adjusting the opening degree of the powder nozzle 122. For example, the powder controller 123 may control an opening area and/or an opening time of the powder nozzle 122. For another example, when a solid seasoning inside the powder housing 121 is dispensed from a lower part of the powder housing 121 to the outside of the powder nozzle 122 through screw transmission, the powder controller 123 may control a dispensing amount of the solid seasoning by receiving information from the control unit and adjusting a screw rotation degree. The powder controller 123 may be disposed at a lower part or on a rear side of the powder housing 121 or the powder nozzle 122. When a dispensing amount of a solid seasoning is controlled through the powder controller 123, even when a weight change caused by a seasoning that is put into a prep container 16 is not measured, an approximate seasoning amount to an intended amount may be directly supplied to the prep container 16. Specifically, a slight error may be allowed in a seasoning amount put into mass cooking. Thus, the powder controller 123 may be configured to control a dispensing amount as described above.

For another example, specifically, a seasoning that is put into small cooking requires an accurate seasoning dispensing amount. Thus, the powder controller 123 may be configured to precisely control a dispensing amount according to a measured weight change value due to a seasoning that is put into the prep container 16.

The powder housing handle 124 may be connected to the powder housing 121. The powder housing handle 124 may be connected to the front side of the powder housing 121. The powder housing handle 124 may protrude from the powder housing 121 in a +x direction. The user may easily grip the powder supply unit 12 by gripping the powder housing handle 124.

A liquid supply unit 13 may be provided as a plurality of liquid supply units. The plurality of liquid supply units 13 may include a first liquid supply unit 13a, a second liquid supply unit 13b, and a third liquid supply unit 13c. It should be noted that a feature of the first liquid supply unit 13a may include the second liquid supply unit 13b and the third liquid supply unit 13c as they are. Hereinafter, the first liquid supply unit 13a is referred to as the liquid supply unit 13 for description.

The liquid supply unit 13 may include a liquid housing 131, a valve 132, a hose 133, a liquid nozzle 134, and a liquid controller 135. The liquid housing 131 may accommodate a seasoning in a liquid state. The liquid housing 131 may include a hollow inside. The liquid housing 131 may be detachably provided to the additional tray 113. The valve 132 may adjust the communicating degree of the liquid housing 131 and the hose 133. The hose 133 may guide the movement of a liquid seasoning such that the liquid seasoning flows to a desired position. The hose 133 may be provided between the valve 132 and the nozzle 134. Since the hose 133 may guide a seasoning in a liquid state, the liquid housing 131 may be provided at a position relatively spaced apart from the prep container 16 compared to the powder housing 121. The liquid nozzle 134 may dispense a liquid seasoning accommodated by the liquid housing 131 to the outside. The liquid controller 135 may control a dispensing amount of the liquid seasoning by receiving information from the control unit and adjusting the opening degree of the liquid nozzle 134. For example, the liquid controller 135 may control an opening area and/or an opening time of the liquid nozzle 134. For another example, the liquid controller 135 may include a pump and may dispense a liquid seasoning to the liquid nozzle 134 that is always open. In this case, the flow of a seasoning may be regulated, or a dispensing amount may be controlled by turning the pump on or off. The liquid controller 135 may be disposed between the liquid housing 131 and the liquid nozzle 134. When a dispensing amount of a liquid seasoning is controlled through the liquid controller 135, even when a weight change caused by a seasoning that is put into the prep container 16 is not measured, an approximate seasoning amount to an intended amount may be directly supplied to the prep container 16. Specifically, a slight error may be allowed in a seasoning amount put into mass cooking. Thus, the liquid controller 135 may be configured to control a dispensing amount as described above.

For another example, specifically, a seasoning that is put into small cooking requires an accurate seasoning dispensing amount. Thus, the liquid controller 135 may be configured to precisely control a dispensing amount according to a measured weight change value due to a seasoning that is put into the prep container 16.

Meanwhile, when a weight change caused by a seasoning that is put into the prep container 16 is not measured, a controlled amount pump having such a shape as a diaphragm or a plunger pump, may be configured to be used as the pump to further improve dispensing accuracy. And, even when the controlled amount pump is used, and when the accuracy of a seasoning dispensing amount is significantly degraded due to various properties, such as viscosity of various liquid seasonings, of a seasoning and the shape of a nozzle and a hose, the liquid controller 135 may be configured to precisely control a dispensing amount according to a measured weight change value due to the seasoning that is put into the prep container 16.

Although not shown, it should be noted that a handle to enable more convenient gripping by the user may be provided in the liquid supply unit 13.

The shutter 17 is positioned below the powder nozzle 122 and the liquid nozzle 134 and may be positioned above the prep container 16. The shutter 17 may unintentionally reduce or block the entering of a seasoning into the inside of the prep container 16. For example, the remaining amount of a seasoning is at an end of the powder nozzle 122 and the liquid nozzle 134 and may drop by gravity. The shutter 17 may block the entering of this seasoning into the inside of the prep container 16.

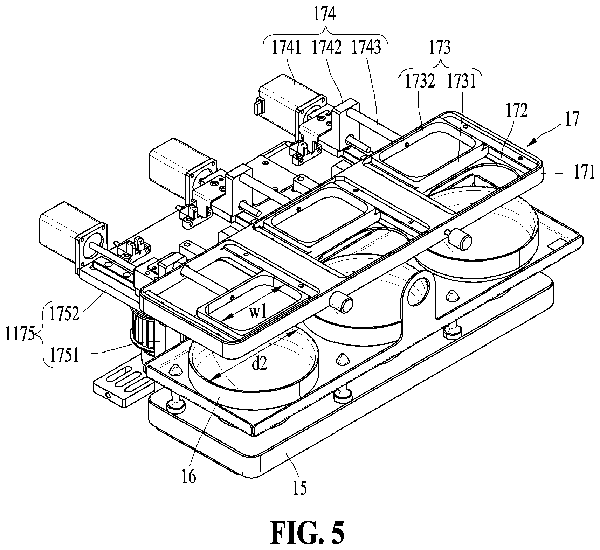

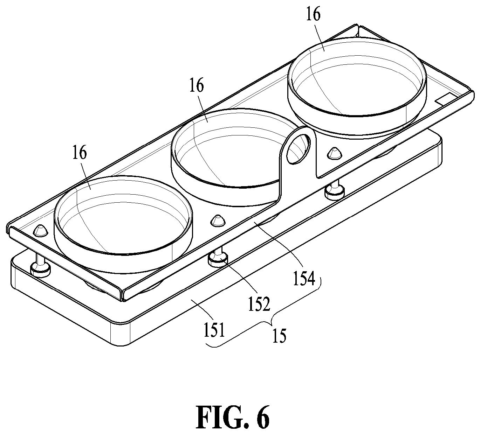

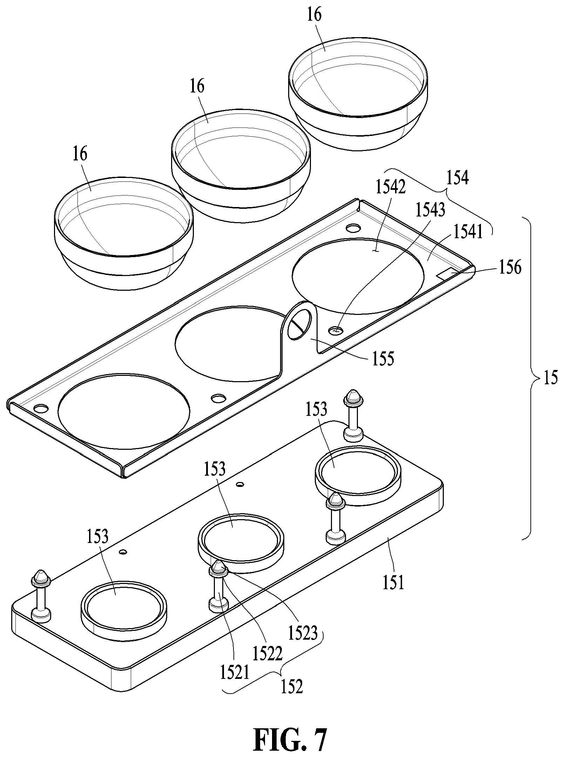

FIG. 5 is a perspective view schematically illustrating a tray, a prep container, and a shutter, according to an embodiment. FIG. 6 is a perspective view schematically illustrating a tray and a prep container, according to an embodiment. FIG. 7 is an exploded perspective view schematically illustrating a tray and a prep container, according to an embodiment.

Referring to FIGS. 5 to 7, a tray 15, a prep container 16, and a shutter 17 may be connected to one another and may simultaneously move.

The tray 15 may support a plurality of prep containers 16. For example, the tray 15 may support three prep containers 16, but the number is not limited thereto. The tray 15 may include a tray base 151, a tray rod 152, a rod cell 153, a tray frame 154, a tray handle 155, and a tray code 156.

The tray base 151 may be provided movably along a main tray. The tray base 151 may receive power from a tray actuator. The tray base 151 may have a plate shape.

The tray rod 152 may be connected to the tray base 151. The tray rod 152 may have a shape protruding from the tray base 151. The tray rod 152 may support the tray frame 154. The tray rod 152 may include a rod body 1521 having a pillar shape, a rod lid/lead 1522 that protrudes from an outer circumferential surface of the rod body 1521 and supports the tray frame 154, and a rod head 1523 that is formed at an edge of the rod body 1521 and gradually narrows as being closer to an upper side. The rod head 1523 may assist the alignment of the tray base 151 and the tray frame 154.

The rod cell 153 may be disposed on the tray base 151 and may measure the weight of the prep container 16. For example, as the amount of a seasoning that is put into the prep container 16 increases, the weight measured by the rod cell 153 may increase.

The tray frame 154 may be detachably provided to the tray base 151. The tray frame 154 may be separated from the tray base 151 or may be seated in the tray base 151. The tray frame 154, when separated from the tray base 151, may simultaneously support and move the plurality of prep containers 16. For example, while the tray frame 154 is being seated in the tray base 151, the prep container 16 may be spaced apart from the tray frame 154. In this structure, the weight of the prep container 16 may be wholly transmitted to the rod cell 153. The tray frame 154, when seated in the tray base 151, surrounds the prep container 16 to prevent the prep container 16 from being unintentionally tilted or deviated from the tray 15.

The tray handle 155 may be connected to the tray frame 154. For example, the tray handle 155 may protrude from the tray frame 154. The user may grip the tray handle 155 to easily move the tray frame 154.

The tray code 156 may be disposed on the tray frame 154. The tray code 156 may be attached to or may be printed on or carved in the tray frame 154. The tray code 156, for example, may include a QR code. A code recognizer may recognize the tray code 156. The tray code 156 may include dish information and/or recipe information.

The prep container 16 may include an accommodation space recessed downwardly. When the tray frame 154 is disposed on the tray rod 152, and the prep container 16 is disposed on the rod cell 153, the prep container 16 may be spaced apart from the tray frame 154. When the tray frame 154 is separated from the tray rod 152 and moves, the prep container 16 may be supported by the tray frame 154.

The shutter 17 may selectively block the entering of a powder seasoning and a liquid seasoning towards an internal space of the prep container 16. The shutter 17 may be connected to the tray 15 and may move together with the tray 15. The shutter 17 may include a shutter frame 171, a shutter guide 172, a slider 173, a shutter actuator 174, and a motor support frame 175.

The shutter frame 171 may be positioned above the tray frame 154. The shutter frame 171 may have a plate shape. The shutter frame 171 may include a plurality of holes for accommodating a plurality of sliders 173. The number of holes may be formed to correspond to the maximum number of prep containers to be seated in the tray 15. A seasoning dispensed from a nozzle may enter the prep container 16 after passing through a hole.

The shutter guide 172 may be formed on the shutter frame 171. The shutter guide 172 may guide the movement of the slider 173.

The slider 173 may be provided movably along the shutter guide 172. The slider 173 may open and close a movement path of a seasoning. The slider 173 may include a slider body 1731 and a slider groove 1732 recessed from the slider body 1731. The slider groove 1732, by temporarily accommodating a seasoning, may assist preventing a seasoning that is dropped to the slider 173 from spilling over.

The shutter actuator 174 may drive the slider 173. The shutter actuator 174 may include a shutter motor 1741 that generates power, a driving part 1742 that slides in a back-and-forth direction by the shutter motor 1741, and a driving rod 1743 that is connected to the driving part 1742 and presses the slider 173.

The motor support frame 175 may be connected to the tray 15 and spaced apart from the shutter frame 171. For example, the motor support frame 175 may be positioned on the rear side of the shutter frame 171 and may be provided at a position lower than the shutter frame 171. In this structure, an excessive increase in the height of the shutter 17 may be reduced and a dispenser may be configured compact. The motor support frame 175 may include a vertical frame 1751 connected to the tray 15 and a horizontal frame 1752 connected to the vertical frame 1751.

Although not shown, the dispenser may further include a loading unit and an unloading unit where a tray frame supporting a plurality of prep containers on the front side is seated. For example, when the loading unit includes a seating unit where a tray frame is seated, and a worker puts a tray frame accommodating a plurality of empty prep containers onto the seating unit, the loading unit may include a loading transport unit that lifts this tray frame, moves it in an x-axis direction, and seats it on the tray 15 below a main tray.

On the other hand, the unloading unit includes an unloading seating unit and an unloading transport unit, and the unloading transport unit lifts a tray frame accommodating a prep container in which the dispensing of a seasoning has been completed, from the tray 15 and may seat it in the unloading seating unit included on the front side of the dispenser.

Accordingly, by including the loading unit and the unloading unit, it is possible to continuously perform the dispensing of seasoning without delay, which may otherwise occur when a worker manually removes a tray frame accommodating a prep container in which dispensing has been completed and replaces it with a new one accommodating an empty prep container.

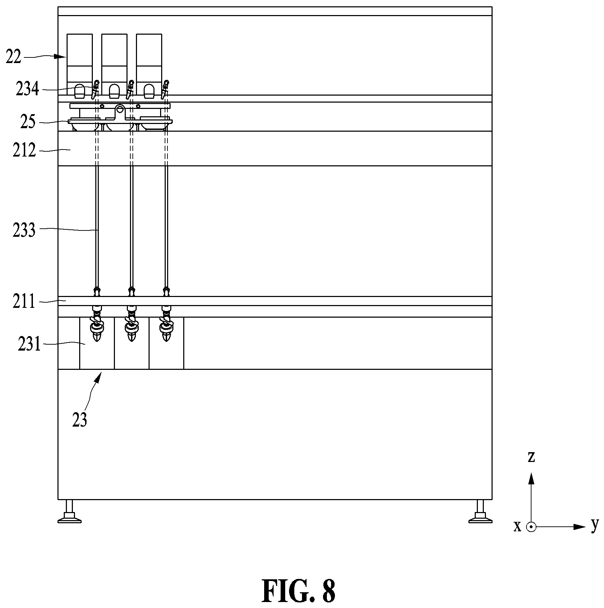

FIG. 8 is a front view schematically illustrating a dispenser configured to supply a liquid seasoning and a powder seasoning, according to an embodiment.

Referring to FIG. 8, the dispenser may include a dispenser body including a table 211 and a main tray 212, a powder supply unit 22 provided on the main tray 212, a liquid supply unit 23 disposed inside the table 211, and a tray 25 provided movably along the main tray 212.

The liquid supply unit 23 may include a liquid housing 231, a hose 233, and a liquid nozzle 234. The liquid supply unit 23 may supply a liquid seasoning through the hose 233. Thus, the position may not be fixed in a space above a prep container. As shown in the drawing, the liquid supply unit 23 may be provided inside a table, for example, inside a refrigerator.

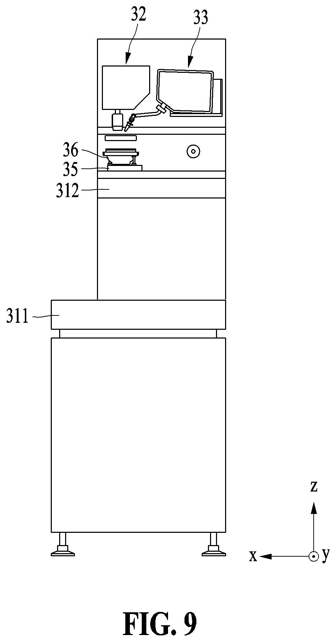

FIG. 9 is a side view schematically illustrating a dispenser configured to supply a liquid seasoning and a powder seasoning, according to an embodiment.

Referring to FIG. 9, the dispenser may include a dispenser body including a table 311 and a main tray 312, a powder supply unit 32 and a liquid supply unit 33 disposed on the main tray 312, a tray 35 provided movably along the main tray 312, and a prep container 36 supported by the tray 35.

According to an embodiment, a dispenser configured to supply a liquid seasoning and a powder seasoning includes a dispenser body including a table, a main tray provided above the table, and an additional tray provided above the main tray; a powder supply unit including a powder housing disposed on the main tray and configured to accommodate a solid seasoning and a powder nozzle that dispenses the solid seasoning from an internal space of the powder housing to the outside; a liquid supply unit including a liquid housing disposed on the additional tray, spaced apart from the powder supply unit in a vertical direction, and configured to accommodate the liquid seasoning and a liquid nozzle that dispenses the liquid seasoning; a tray movably disposed on the main tray and positioned below the powder supply unit and the liquid supply unit; a plurality of prep containers disposed on the tray; and a control unit configured to control the powder supply unit, the liquid supply unit, and the tray, in which one prep container of the plurality of prep containers accommodates the solid seasoning dispensed from the powder supply unit, accommodates the liquid seasoning dispensed from the liquid supply unit, or accommodates both the solid seasoning and the liquid seasoning simultaneously.

According to an embodiment, a dispenser configured to supply a liquid seasoning and a powder seasoning includes a dispenser body including a table and a main tray provided above the table, and an additional tray provided above the main tray; a powder supply unit including a powder housing disposed on the main tray and configured to accommodate a solid seasoning and a powder nozzle that dispenses the solid seasoning from an internal space of the powder housing to the outside; a liquid supply unit including a liquid housing provided inside the table, disposed at a position spaced apart from the powder supply unit in a vertical direction, and configured to accommodate the liquid seasoning and a liquid nozzle that dispenses the liquid seasoning; a tray movably disposed on the main tray and positioned below the powder supply unit and the liquid supply unit; a plurality of prep containers disposed on the tray; and a control unit configured to control the powder supply unit, the liquid supply unit, and the tray, in which one prep container of the plurality of prep containers accommodates the solid seasoning dispensed from the powder supply unit, accommodates the liquid seasoning dispensed from the liquid supply unit, or accommodates both the solid seasoning and the liquid seasoning simultaneously.

According to an embodiment, a dispenser configured to supply a liquid seasoning and a powder seasoning includes a dispenser body including a table and a main tray provided above the table, and an additional tray provided above the main tray; a powder supply unit including a powder housing disposed on the main tray and configured to accommodate a solid seasoning and a powder nozzle that dispenses the solid seasoning from an internal space of the powder housing to the outside; a liquid supply unit including a liquid housing disposed on the main tray, provided behind the powder supply unit, and configured to accommodate the liquid seasoning and a liquid nozzle that dispenses the liquid seasoning; a tray movably disposed on the main tray and positioned below the powder supply unit and the liquid supply unit; a plurality of prep containers disposed on the tray; and a control unit configured to control the powder supply unit, the liquid supply unit, and the tray, in which one prep container of the plurality of prep containers accommodates the solid seasoning dispensed from the powder supply unit, accommodates the liquid seasoning dispensed from the liquid supply unit, or accommodates both the solid seasoning and the liquid seasoning simultaneously.

In an embodiment, the control unit may control the amount of the solid seasoning dispensed from the powder supply unit and the amount of the liquid seasoning dispensed from the liquid supply unit and may control the movement of the tray.

In an embodiment, the dispenser may further include an interface installed on the dispenser body and provides an input signal to the control unit.

In an embodiment, the interface may output an auditory signal or a visual signal externally.

In an embodiment, the tray may include a tray base provided movably along the main tray; a tray rod connected to the tray base; and a tray frame disposed on the tray rod, spaced apart from the tray base, and configured to support the plurality of prep containers.

In an embodiment, the tray may include a tray base provided movably along the main tray; and a rod cell disposed on the tray base and configured to detect the weight of a prep container.

In an embodiment, when the tray frame is disposed on the tray rod, and the prep container is disposed on the rod cell, the prep container may be spaced apart from the tray frame, and, when the tray frame moves separately from the tray rod, the prep container may be supported by the tray frame.

In an embodiment, the tray may further include a code provided on the tray frame and recognizable by an external scanner.

In an embodiment, the dispenser may further include a shutter that selectively blocks the powder seasoning and the liquid seasoning from entering the internal space of the prep container.

In an embodiment, the shutter may be connected to the tray and may move together with the tray.

In an embodiment, the shutter may include a shutter frame disposed between the powder supply unit and a prep container; a shutter guide formed on the shutter frame; a slider provided movably along the shutter guide; and a shutter actuator configured to drive the slider.

In an embodiment, the shutter may include a motor support frame connected to the tray, spaced apart from the shutter frame, and configured to support the shutter actuator.

In an embodiment, the slider may be movable to a position at which it vertically overlaps both a powder nozzle and a liquid nozzle that are positioned adjacent to each other.

In an embodiment, the powder supply unit and the liquid supply unit may be provided as a plurality of powder supply units and a plurality of liquid supply units, respectively, and a powder nozzle of the plurality of powder supply units and a liquid nozzle of the plurality of liquid supply units may be alternately arranged along a moving direction of the tray.

In an embodiment, a distance between the adjacent powder nozzle and liquid nozzle may be less than the inner diameter of the upper edge of a prep container.

In an embodiment, the powder supply unit may further include a powder control unit that controls the discharge amount of the solid seasoning by adjusting the rotation degree of a screw that transfers the powder seasoning to the powder nozzle, based on a signal received from the control unit.

In an embodiment, the liquid supply unit may further include a liquid control unit that controls the discharge amount of the liquid seasoning by adjusting the operation time of a pump that transfers the liquid seasoning to the liquid nozzle, based on a signal received from the control unit.

The liquid supply unit may further include a hose that connects the liquid housing to the liquid nozzle and guides the movement of the liquid seasoning, and the dispenser body may further include a hose guide that supports the hose.

As described above, the embodiment has been described with reference to specific matters such as specific components and limited embodiments and drawings, but these are provided to help the overall understanding. Also, the present disclosure is not limited to the above-described embodiments, and various modifications and variations are possible from these descriptions by those skilled in the art to which the present disclosure pertains. Accordingly, the scope of the present disclosure is defined not by the detailed description, but by the claims and their equivalents, and all variations within the scope of the claims and their equivalents are to be construed as being included in the disclosure.

## Claims

1. A dispenser configured to supply a liquid seasoning and a powder seasoning, the dispenser comprising:
a dispenser body comprising a table, a main tray provided above the table, and an additional tray provided above the main tray;
a powder supply unit comprising a powder housing disposed on the main tray and configured to accommodate a solid seasoning and a powder nozzle that dispenses the solid seasoning from an internal space of the powder housing to the outside;
a liquid supply unit comprising a liquid housing disposed on the additional tray, spaced apart from the powder supply unit in a vertical direction, and configured to accommodate the liquid seasoning and a liquid nozzle that dispenses the liquid seasoning;
a tray movably disposed on the main tray and positioned below the powder supply unit and the liquid supply unit;
a plurality of prep containers disposed on the tray; and
a control unit configured to control the powder supply unit, the liquid supply unit, and the tray,
wherein one prep container of the plurality of prep containers accommodates the solid seasoning dispensed from the powder supply unit, accommodates the liquid seasoning dispensed from the liquid supply unit, or accommodates both the solid seasoning and the liquid seasoning simultaneously.

2. A dispenser configured to supply a liquid seasoning and a powder seasoning, the dispenser comprising:
a dispenser body comprising a table and a main tray provided above the table;
a powder supply unit comprising a powder housing disposed on the main tray and configured to accommodate a solid seasoning and a powder nozzle that dispenses the solid seasoning from an internal space of the powder housing to the outside;
a liquid supply unit comprising a liquid housing provided inside the table, disposed at a position spaced apart from the powder supply unit in a vertical direction, and configured to accommodate the liquid seasoning and a liquid nozzle that dispenses the liquid seasoning;
a tray movably disposed on the main tray and positioned below the powder supply unit;
a plurality of prep containers disposed on the tray; and
a control unit configured to control the powder supply unit, the liquid supply unit, and the tray,
wherein one prep container of the plurality of prep containers accommodates the solid seasoning dispensed from the powder supply unit, accommodates the liquid seasoning dispensed from the liquid supply unit, or accommodates both the solid seasoning and the liquid seasoning simultaneously.

3. A dispenser configured to supply a liquid seasoning and a powder seasoning, the dispenser comprising:
a dispenser body comprising a table and a main tray provided above the table;
a powder supply unit comprising a powder housing disposed on the main tray and configured to accommodate a solid seasoning and a powder nozzle that dispenses the solid seasoning from an internal space of the powder housing to the outside;
a liquid supply unit comprising a liquid housing disposed on the main tray, provided behind the powder supply unit, and configured to accommodate the liquid seasoning and a liquid nozzle that dispenses the liquid seasoning;
a tray movably disposed on the main tray and positioned below the powder supply unit;
a plurality of prep containers disposed on the tray; and
a control unit configured to control the powder supply unit, the liquid supply unit, and the tray,
wherein one prep container of the plurality of prep containers accommodates the solid seasoning dispensed from the powder supply unit, accommodates the liquid seasoning dispensed from the liquid supply unit, or accommodates both the solid seasoning and the liquid seasoning simultaneously.

4. The dispenser of any one of claims 1 to 3, wherein
the control unit is configured to control an amount of the solid seasoning dispensed from the powder supply unit and an amount of the liquid seasoning dispensed from the liquid supply unit and is configured to control the movement of the tray.

5. The dispenser of any one of claims 1 to 3, further comprising:
an interface installed on the dispenser body and provides an input signal to the control unit.

6. The dispenser of claim 5, wherein
the interface outputs an auditory signal or a visual signal externally.

7. The dispenser of any one of claims 1 to 3, wherein the tray comprises:
a tray base provided movably along the main tray;
a tray rod connected to the tray base; and
a tray frame disposed on the tray rod, spaced apart from the tray base, and configured to support the plurality of prep containers.

8. The dispenser of any one of claims 1 to 3, wherein the tray comprises:
a tray base provided movably along the main tray; and
a rod cell disposed on the tray base and configured to detect a weight of a prep container.

9. The dispenser of claim 8, wherein,
when the tray frame is disposed on the tray rod, and the prep container is disposed on the rod cell, the prep container is spaced apart from the tray frame, and,
when the tray frame moves separately from the tray rod, the prep container is supported by the tray frame.

10. The dispenser of claim 7, wherein
the tray further comprises a code provided on the tray frame and recognizable by an external scanner.

11. The dispenser of any one of claims 1 to 3, further comprising:
a shutter that selectively blocks the powder seasoning and the liquid seasoning from entering the internal space of the prep container.

12. The dispenser of claim 11, wherein
the shutter is connected to the tray and moves together with the tray.

13. The dispenser of claim 12, wherein the shutter comprises:
a shutter frame disposed between the powder supply unit and a prep container;
a shutter guide formed on the shutter frame;
a slider provided movably along the shutter guide; and
a shutter actuator configured to drive the slider.

14. The dispenser of claim 13, wherein the shutter comprises:
a motor support frame connected to the tray, provided at a position spaced apart from the shutter frame, and configured to support the shutter actuator.

15. The dispenser of claim 14, wherein
the slideris configured to move to a position at which it vertically overlaps both a powder nozzle and a liquid nozzle that are positioned adjacent to each other..

16. The dispenser of any one of claims 1 to 3, wherein
the powder supply unit and the liquid supply unit are provided as a plurality of powder supply units and a plurality of liquid supply units, respectively, and
a powder nozzle of the plurality of powder supply units and a liquid nozzle of the plurality
of liquid supply units are alternately arranged along a moving direction of the tray.

17. The dispenser of claim 16, wherein
a distance between the adjacent powder nozzle and liquid nozzle is less than the inner diameter of the upper edge of a prep container.

18. The dispenser of any one of claims 1 to 3, wherein,
when individual nozzles or a plurality of nozzle groups are arranged at equal intervals along a moving direction of the tray in the dispenser, a pitch between a plurality of prep containers seated in the tray is configured to be an integer multiple or a fractional multiple (1/n) of a distance between the individual nozzles or a distance between the nozzle groups.

19. The dispenser of any one of claims 1 to 3, further comprising:
each of a loading unit and an unloading unit, each provided on the front side of the dispenser and configured to receive a tray frame accommodating a plurality of prep containers, wherein each of the loading unit and the unloading unit comprises a seating unit on which the tray frame is placed and a transport unit configured to lift and move the tray frame in a front-rear direction.

20. The dispenser of any one of claims 1 to 3, wherein
the liquid supply unit further comprises a hose that connects the liquid housing to the liquid nozzle and is configured to guide the movement of the liquid seasoning, and
the dispenser body further comprises a hose guide that supports the hose.
